# EUROPEAN PATENT APPLICATION

(11) **EP 3 057 188 A2**
(43) Date of publication of application: **17.08.2016**
(21) Application number: 16155593.3
(22) Date of filing: 12.02.2016
(51) Int. Cl.: H02G 3/12

(54) **BOX AND PLATE ASSEMBLY FOR INSTALLING ELECTRICAL ELEMENTS OR THE LIKE IN HOLLOW FACES SUCH AS THOSE OF LAMINATED BOARDS OR THE LIKE**

(30) Priority: 13.02.2015 ES 201530175
(71) Applicant: Schneider Electric España, S.A., 08019 Barcelona (ES)
(72) Inventor: SUESCUN ORRILLO, César, 31100 PUENTE LA REINA, NAVARRA (ES); RUIZ DE LARRAMENDI, José Miguel, 31100 PUENTE LA REINA, NAVARRA (ES); BRUNBERG, Magnus, 61129 NYKÖPING (SE); MANARI, Sujith, 560 077 BANGALORE (IN)
(74) Representative: Intès, Didier Gérard André

(57) **Abstract**

The invention relates to a box and frame assembly for installing electrical elements or the like in hollow wall faces such as those of laminated boards or the like, comprising a box (3) provided with retaining systems such as catches or the like that can be actuated by means of fixing systems such as screws or the like for the secure anchoring of said box (3) in the installation of application; and a frame (4) secured by snap fit on the box (3) by means of engaging structures, for mounting the attached assembly in the installation of application; the frame (4) being provided with openings (7) that allow actuating therethrough the fixing systems for actuating the retaining systems for anchoring the box (3).

## Description

### Technical Field

The present invention relates to the mounting of electrical elements or the like, such as sockets, switches, etc., in the site of installation, proposing a box and frame assembly for that purpose, with features that make the installation mounting in hollow wall faces such as those of laminated boards or the like, such as those in plasterboards known as "PLADUR" or the like, particularly advantageous.

### State of the Art

Electrical installation elements or the like, such as sockets, switches, etc., are conventionally arranged in the sites of application by housing them in mounting boxes, on which they are secured by means of a frame, the mounting being able to be established in a flush mounted arrangement or in a surface arrangement on the installation wall face, for which purpose there are mounting boxes with specific structural features for each of said arrangements.

In relation to the flush mounting arrangement, there are solutions for housing mounting boxes in cavities in walls built with bricks or similar means, in which the mounting boxes for the electrical elements or the like are fixed with cement, plaster or similar means, in the installation cavity. There are also solutions for mounting in hollow wall faces such as those formed by laminated boards or the like, such as those in plasterboards known as "PLADUR" or the like, in which the mounting boxes of the electrical elements or the like are arranged in openings made in the wall face, the boxes being secured in said openings by means of anchoring catches that are provided in the boxes and can be actuated by means of screws.

In conventional solutions of such flush mounted installations, first the mounting box is installed in the corresponding cavity or opening of the installation wall face or wall, and then once the box is fixed, the securing frame is arranged thereon for securing the electrical element or the like to be installed, the securing of the frame on the box being established by means of screws or with practicable catches associated with the frame.

Said form of installation has the drawback that the dual mounting that must be done in the site of installation, first of the box and then of the frame, makes the mounting of the installation slow and cumbersome, which is further increased because if the box-frame assembly is tilted in deviation with respect to the horizontal position, it results in a position of the electrical element or the like that is installed that is unpleasing to the eye, so both the arrangement of the box in the installation cavity and the securing of the frame on the box must be done with particular care so that the mounting of the electrical element or the like to be installed ends up being in the correct position.

To adjust the positioning of the box and the frame in relation to the horizontal, the use of auxiliary means such as levels or rules is known, whereby achieving precise adjustment of the leveling, but since the leveling operation must be done both when the box is installed and when the frame is incorporated on it, the use of said auxiliary means considerably slows down the installation process.

### Object of the Invention

According to the invention, a box-frame assembly for installing elements making up electric installations or the like, such as sockets, switches, etc., in hollow faces of the type formed by laminated boards or the like is proposed.

This box-frame assembly object of the invention comprises a box for flush mounting in hollow wall faces such as those of laminated boards or the like, of the "PLADUR" plasterboard type or the like, having retaining systems such as anchoring catches or the like that can be actuated by fixing systems such as screws or the like for securing in the installation of application; and a frame having toothed legs for the snap fit thereof with respect to the box in relation to corresponding engaging structures provided in it.

An assembly is thereby obtained that allows a rapid assembly attachment between the box and the frame by snap fit, to then install the assembly formed by both elements attached to one another in the site of application. To that end, the frame is furthermore provided with openings that allow actuating through them screws or similar fixing systems for actuating the anchoring catches or similar retaining systems for anchoring the box.

Said arrangement facilitates the work of installing the box-frame assembly in the site of application, allowing a considerable time saving in the operation of the installation, since the attachment mounting between the box and the frame is performed independently from the placement in the site of installation, where the incorporation is carried out by means of a single operation with the assembly of the two elements already attached to one another, such that all that must be done is to adjust the placement in the installation.

With said arrangement, the subsequent dismounting actions for maintenance operations are in turn very simple, since the snap-fit system allows easy dismounting of the frame without requiring unscrewing or disengagement of similar fixing systems.

Nevertheless, the frame has slotted holes or the like through which screws or similar securing systems can be established with respect to corresponding threaded or fixing structures in the box, which allows ensuring the securing between the frame and the box, complementarily to the snap fit, if the latter is insufficient for ensuring a secure attachment between the frame and the box.

The incorporation of a level in the frame can furthermore be envisaged, which level can be fixed or incorporated as an accessory in a detachable provisional arrangement, whereby making leveling of the box-frame assembly in the installation easier, in turn simplifying the installer's job and reducing the time of the installation operation.

As a result, said box-frame assembly object of the invention has very advantageous features, acquiring a preferred character with respect to the solutions existing today among flush mounting boxes for the same application, i.e., in hollow wall faces such, as those of laminated boards or the like.

### Description of the Drawings

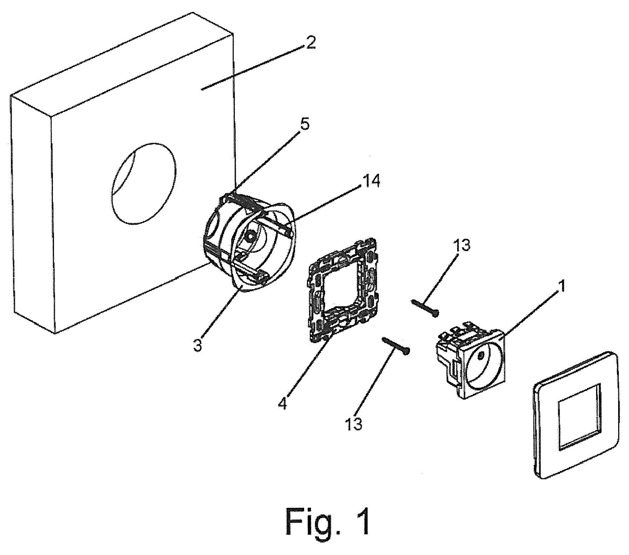

Figure 1 shows an exploded perspective view of the installation mounting of an electrical element by means of a box-frame assembly according to the invention with respect to a hollow wall face, such as those of laminated boards or the like, of the "PLADUR" plasterboard type or the like.

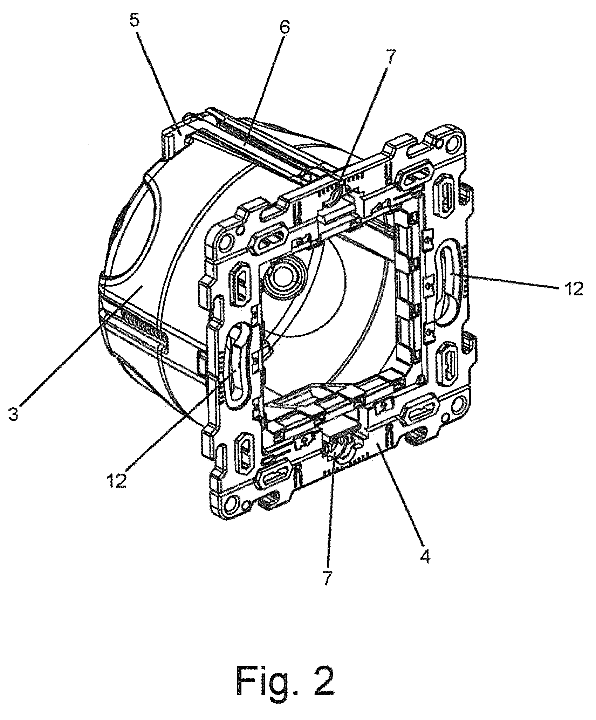

Figure 2 is a perspective view of the box-frame assembly according to the invention with the two elements attached to one another.
Figure 3 shows a diametral section view of the attached box-frame assembly.
Figure 4 is an enlarged depiction of detail A indicated in the preceding figure.
Figure 5 is a front view of an example of the frame for a box-frame assembly according to the invention.
Figure 6 is a view of the frame in the preceding figure seen from the rear face.
Figure 7 is a front view of an assembly of two frames like that of Figures 5 and 6, attached to one another, defining a double frame.
Figure 8 is a perspective view seen from the front part of an example of flush mounting box for a box-frame assembly according to the invention.
Figure 9 is a perspective view of the box in the preceding figure seen from the rear part.
Figure 10 is a front view of a frame according to the invention, incorporating an accessory support carrying a level coupled therein.
Figure 11 is an exploded perspective view of a box-frame assembly according to the invention, with an accessory support incorporating a detachably arranged level with respect to the frame.

### Detailed Description of the Invention

The object of the invention relates to a box-frame assembly, for the installation mounting of elements (1) of electrical installations or the like in hollow wall faces (2), such as those of laminated boards or the like, such as those of the "PLADUR" plasterboard type or the like.

Said assembly object of the invention is formed by a box (3) for flush mounting in the wall faces (2) of application, and a frame (4) that can be attached to the box (3) to form a single unit for handling and mounting in the installation with respect to the wall face (2) of application.

The box (3) incorporates catches or similar retaining systems (5), which can be actuated by means of screws or similar fixing systems (6), to establish a secure anchoring with respect to the wall face (2) in the installation of application; the frame (4) being provided with openings (7) that allow access therethrough for actuating the screws or similar fixing systems (6) for actuating the catches or similar retaining systems (5) for anchoring the box (3).

The frame (4) has toothed legs (8), by means of which a snap fit can be established with respect to corresponding engaging structures (9) of the box (3).

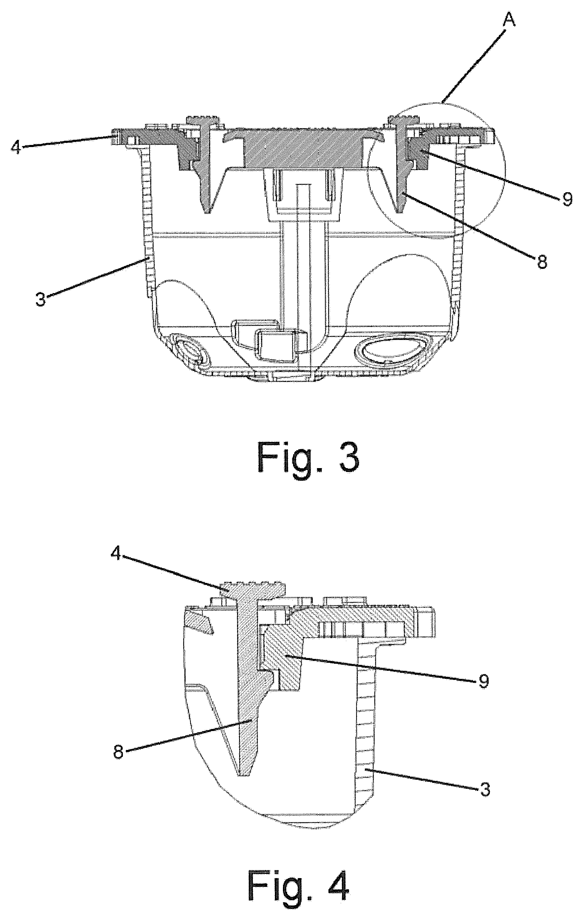

The frame (4) can therefore be mounted on the box (3), establishing a snap fit between both elements, by means of an interlocking of the toothed legs (8) of the frame (4) in relation to the engaging structures (9) of the box (3), as seen in Figures 3 and 4, thereby forming, with both elements attached to one another, a unit for the installation mounting on the wall face (2) of application, in which the screws or similar fixing systems (6) for actuating said catches or similar retaining systems (5) can be actuated through the openings (7) of the frame (4) in order to establish the secure anchoring by means of the catches or similar retaining systems (5) of the box (3), so the mounting of the installation is quicker and simpler than if the installation mounting of the box (3) is done on the wall face (2) of application first and the frame (4) is incorporated on the installed box (3) after that, which is how it is done with conventional solutions.

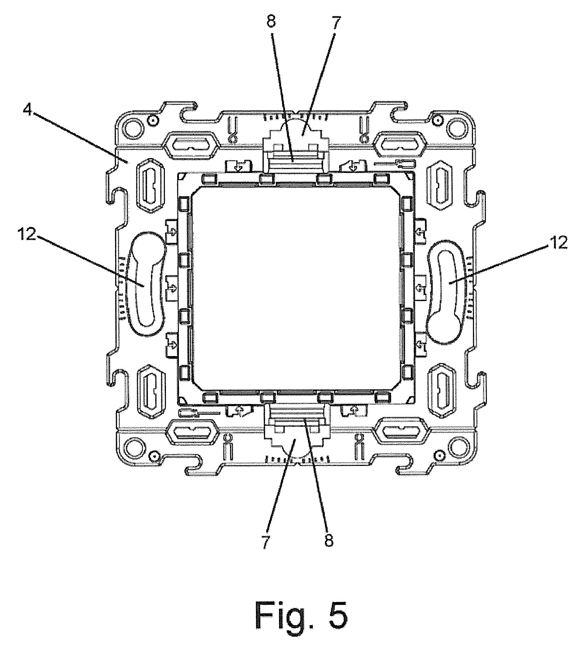

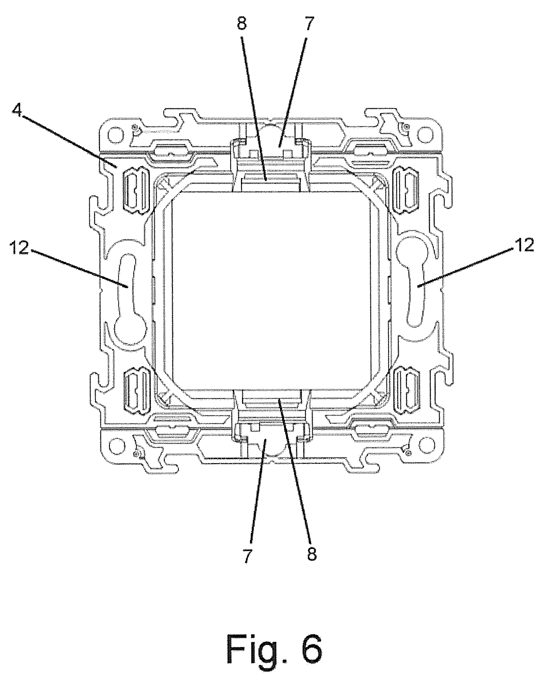

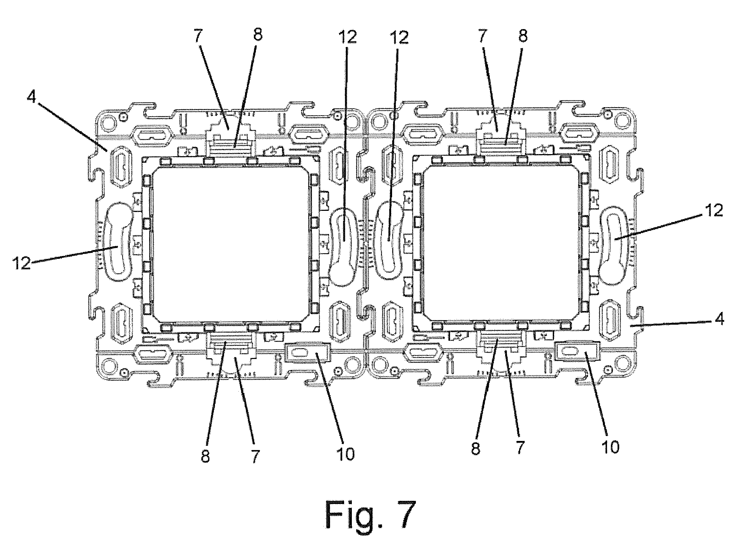

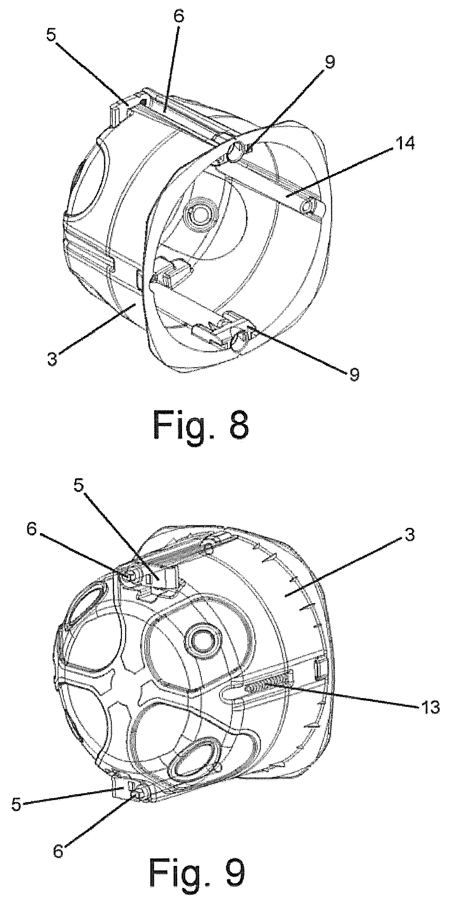

This box-frame assembly solution can be applied, with the same features of the invention, with a single frame (4) as shown in Figures 5 and 6, and a single box (3) as shown in Figures 8 and 9, as well as with a multi-frame assembly formed, for example, by means of attaching two or more single frames (4), as shown in the embodiment of Figure 7, arranging on the multi-frame assembly respective single boxes (3) or a common multi-box assembly corresponding with the multi-frame assembly, without altering the concept of the invention, the features of which refer to the relation between a frame (4) and a flush mounting box (3) for attaching said elements together, forming a mounting unit for the installation of application.

In turn, the described embodiment in which the toothed legs (8) are located in the frame (4) and the engaging structures (9) are located in the box (3) is not limiting, since the functional concept is not altered with an inverse arrangement, i.e., the toothed legs (8) are located in the box (3) and the engaging structures (9) are located in the frame (4), which must therefore be understood as also being comprised in the scope of the invention.

Given that in the installation of application the box-frame assembly must be arranged with suitable leveling so that the element (1) to be installed is not positionally tilted in a manner unpleasing to the eye, it is envisaged that the frame (4) can incorporate a level (10) to make the placement of the suitably leveled box-frame assembly in the installation of application easier.

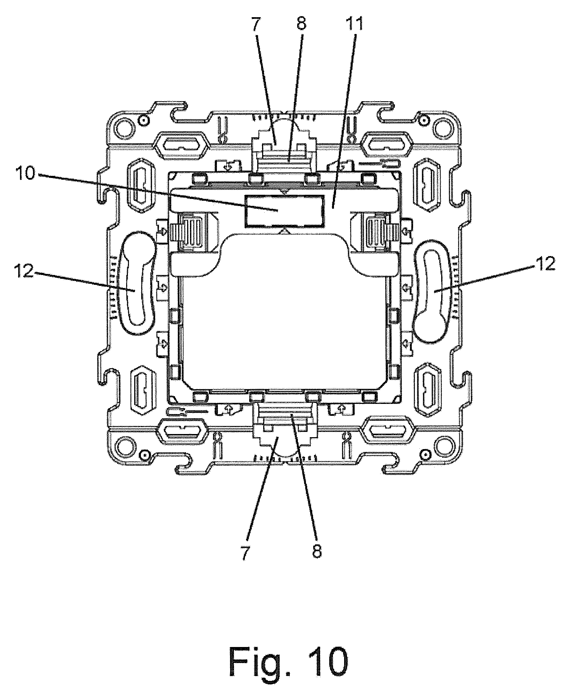

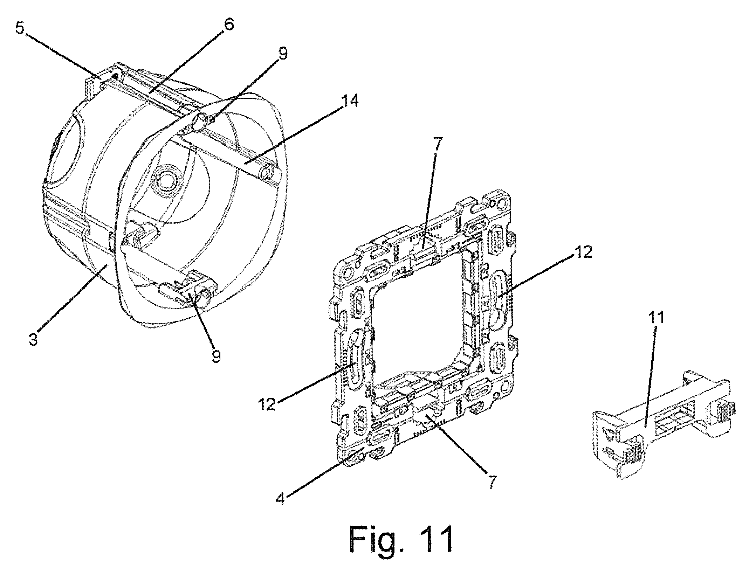

To that end, the frame (4) can incorporate a level (10) fixedly integrated therein, or, as seen in the embodiment of Figures 10 and 11, an accessory support (11) that is detachably coupled on the frame (4) can be used, said accessory support (11) incorporating a level (10) such that for installing the box-frame assembly in the site of application, said accessory support (11) carrying the level (10) is arranged in the frame (4), being removed once the box-frame assembly is anchored on the wall face (2) of installation.

The frame (4) also has slotted holes or the like (12) through which there can be established a screwed securing or similar fixing systems of said frame (4) with respect to the box (3) by means of screws or similar fixing systems (13) which, going through said slotted holes or the like (12), are screwed into or fixed to corresponding structures (14) of the box (3) to reinforce the snap fit by means of the interlocking of the toothed legs (8) with respect to the engaging structures (9) when this snap fit is insufficient for assuring a secure attachment of the frame (4) on the box (3).

## Claims

1. A box and frame assembly for installing electrical elements or the like in hollow wall faces such as those of laminated boards or the like, comprising a box (3) provided with retaining systems such as catches or the like that can be actuated by means of fixing systems such as screws or the like for a secure anchoring of the installation on a hollow wall face (2) such as those of laminated boards or the like, and a frame (4) which can be secured on the mentioned box (3), **characterized in that** the frame (4) has toothed legs (8) and the box (3) has engaging structures (9), or vice versa, in order to establish a snap fit between said frame (4) and said box (3), forming with both elements attached to one another an overall unit for the installation mounting on the wall face (2) of application; the frame (4) being provided with openings (7) that allow actuation therethrough on the fixing systems for actuating the retaining systems (5) for anchoring the box (3) on the wall face (2) in the installation of application.

2. The box and frame assembly for installing electrical elements or the like in hollow wall faces such as those of laminated boards or the like according to claim 1, **characterized in that** a level (10) is incorporated in the frame (4) to facilitate the positioning of the assembly formed by the box (3) and the frame (4) in the installation of application easier.

3. The box and frame assembly for installing electrical elements or the like in hollow wall faces such as those of laminated boards or the like according to claim 1, **characterized in that** an accessory support (11) carrying a level (10) is detachably coupled on the frame (4).

4. The box and frame assembly for installing electrical elements or the like in hollow wall faces such as those of laminated boards or the like according to any one of the preceding claims, **characterized in that** the frame (4) has slotted holes or the like (12) through which fixing systems such as screws or the like can be passed in order to be screwed into or fixed to corresponding structures (14) of the box (3).
